# EUROPEAN PATENT SPECIFICATION

(11) **EP 0 543 800 B1**
(45) Date of publication and mention of the grant of the patent: **22.07.1998**
(21) Application number: 93102191.9
(22) Date of filing: 01.10.1985
(51) Int. Cl.: G11B 11/10

(54) **Magneto optical reproducing apparatus**
Magneto-optisches Wiedergabegerät
Appareil de reproduction magnéto-optique

(30) Priority: 02.10.1984 JP 207838/84
(43) Date of publication of application: 26.05.1993
(62) Divisional of application: 85307022.5
(73) Proprietor: SHARP KABUSHIKI KAISHA, Osaka-shi, Osaka-fu 545 (JP)
(72) Inventor: Ohta, Kenji, Yao-shi, Osaka-fu (JP); Inui, Tetuya, Nara-shi, Nara-ken (JP); Fujii, Yoshikazu, Nara-shi, Nara-ken (JP); Deguchi, Toshihisa, Nara-shi, Nara-ken (JP); Maeda, Shigemi, Yamatokoriyama-shi, Nara-ken (JP)
(74) Representative: Brown, Kenneth Richard

(56) References cited:
- EP-A- 0 099 085
- EP-A- 0 100 995
- EP-A- 0 126 594
- EP-A- 0 155 000
- EP-A- 0 173 533
- FR-A- 2 497 994
- GB-A- 2 087 628

## Description

The present invention relates to a magneto-optical reproducing apparatus as used or for use with a magneto-optical memory element on which at least one of information recording, reading and erasing operations can be magneto-optically performed.

Recently, an optical memory element, which optically records, reads and erases information, has been gaining attention in various applications as a high density, large capacity memory. Many studies have been made, particularly in relation to an optical disc memory with disc shaped recording element which permits faster access than a tape element.

Since the information recording unit of the optical memory element is about 1µmφ, it is essential to place a light beam at a predetermined position for the information reading or erasing operation; various servo technologies have been employed for this purpose, because it is difficult to control the beam position with dependence on mechanical accuracy alone.

For example, in the optical disc memory, a focus servo is used to compensate for facial movement of the disc (that is, movement substantially perpendicular to the surface of the disc) and a tracking servo to compensate for core movement (that is, movement substantially parallel to the plane of the disc). When the latter servo is used in a read-only type optical memory, beam position is controlled with reference to previously recorded pits (normally, recesses formed in the PMMA or polycarbonate substrate). In the optical memory of the additive recording type (so called add-on memory) or of the erasable memory type, however, guide track grooves and address signal pits indicating the positions of the grooves are normally formed in the substrate.

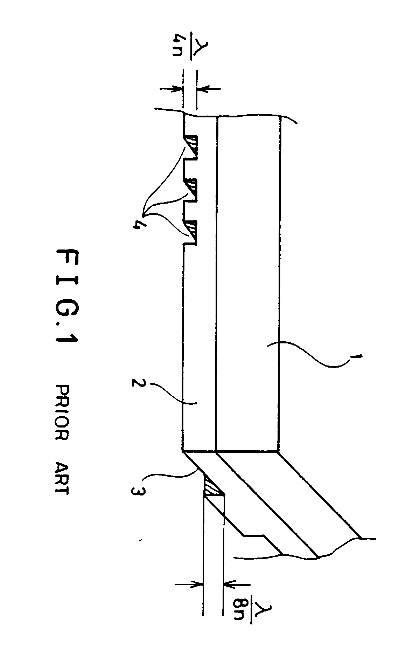

The construction of conventional guide track grooves used in the optical memory of the add-on-memory type is described now with reference to Fig. 1.

Fig. 1 is a partially enlarged view of a conventional optical memory disc in section along the concentric or spiral guide track grooves formed in the disc.

In Fig. 1, 1 denotes a PMMA or glass substrate 1 _{∼} 1.5mm thick, and 2 is a photosensitive resin layer (10µm _{∼} 100µm thick 2P layer) with guide grooves 3 formed therein for storing information. 4 denotes address signal pits representing the positions of the guide track grooves 3. The depth of the pits 4 is normally λ/4n (λ is the wavelength of the reproducing laser beam, and n is the refractive index of the 2P layer), so that address signals are optimally reproduced. The depth of the guide grooves 3 is λ/8n to permit storage of as many as possible tracking signals.

In addition to the above 2P method, it is also common to form the guide grooves 3 and the pits 4 integrally with the PMMA or polycarbonate resin recording disc. In either method, however, moisture in the resin layer, on which the recording medium is disposed, can reach and deteriorate the recording medium.

To overcome the above problem, the inventor has presented a method for forming grooves directly in a glass substrate.

An example of such a method is described in U.S. Patent US-A-4,544,443 "METHOD FOR MANUFACTURING AN OPTICAL MEMORY ELEMENT", filed on May 3, 1984 by Kenji OHTA, Junji HIROKANE, Hiroyuki KATAYAMA, Akira TAKAHASHI and Hideyoshi YAMAOKA, and assigned to the same assignee as the present application. The corresponding European Patent Application was filed on May 10, 1984 and assigned the Application No. 84303176.6/Publication No. EP-A-0,126,594. This copending European Patent Application was published on 28th November 1984 and comprises prior art in accordance with Article 54(3) EPC. The corresponding Canadian Patent Application was filed on May 8, 1984 and assigned the Application No. 453,843.

According to the disclosure of the copending application, a resist film is disposed on a glass substrate, and a laser beam is applied onto the resist film to form a guide groove and address signal pit pattern in the resist film. The thus formed pattern is developed and, then, the guide groove pattern of the developed resist film is directly formed on the glass substrate by the reactive ion etching operation. With this method, however, it is difficult to form the guide grooves 3 and the address signal pits 4 with different depths, because their depth is determined by the time for which the glass substrate is exposed to plasma in the reactive ion etching operation. Accordingly, the configurations of the guide grooves and the address signal pits must be determined, taking into consideration of the address signal output, tracking output or signal output for reading these outputs.

EP-A3-0 100 995 describes an optical disc with a particular arrangement of address pits and tracking grooves formed in its surface. Data is recorded by melting information pits into the reflective metal recording layer using a laser beam. This data is read out by detecting light intensity variations in light reflected from the disc which are caused by the information pits.

EP-A1-0 099 085 discloses an optical disc in which, again, information is recorded by forming pits, using a laser beam, in a light reflective layer disposed on a transparent substrate. Address signal pits are formed on the bottom surface of a tracking guide. A replication method is disclosed for producing the substrate from a transparent synthetic resin using a master disc formed with recesses defining the tracking guide and address signal pits.

According to a first aspect of the invention there is provided a magneto-optical reproducing apparatus for use with a magneto-optical memory element comprising a substrate and a perpendicularly magnetized magneto-optical recording layer, said substrate having guide track grooves and address signal pits, a width of said guide track grooves being larger than that of said address signal pits, said magneto-optical recording layer having a thickness which remains unchanged during recording or reproducing, said magneto-optical reproducing apparatus comprising:
an address information read-out means for detecting the variation of light beam intensity reflected from said address signal pits; and data information read-out means for detecting the variation of magnetic polarization angle properties in said magneto-optical recording layer disposed on said guide track grooves wider than said address signal pits so as to obtain information signal of improved C/N thereby optimizing the quality of read-out of both the data information and the address information.

Preferred features are included in sub-claims 2 to 15.

In order that the present invention may be better understood a detailed description will be given of an embodiment thereof, by way of example, with reference to the accompanying drawings, wherein:
Figure 1 is a perspective view which schematically shows a sectional structure of an optical memory disc of the prior art;
Figure 2 is an enlarged view showing guide grooves and address signal pits representing the addresses of the guide grooves in an optical memory element according to the present invention;
Figure 3 is a partially enlarged view of the optical memory element disc of Figure 2 in section along the guide grooves;
Figure 4 is a conceptual drawing showing the construction of the pick-up for an optical magnetic disc;
Figure 5 is a partially enlarged section view of an optical magnetic disc according to the invention;
Figure 6 shows the relationship between S/N and the track width;
Figures 7(A) and 7(B) show the variation of the address signal according to the track width;
Figures 8(A) and 8(B) show the relationship between the recording signal or address signal pits and the beam diameter;
Figure 9 shows an example method for manufacturing the optical memory element of the present invention; and
Figure 10 shows an example of the electrical input signals for manufacturing the optical memory element of the present invention.

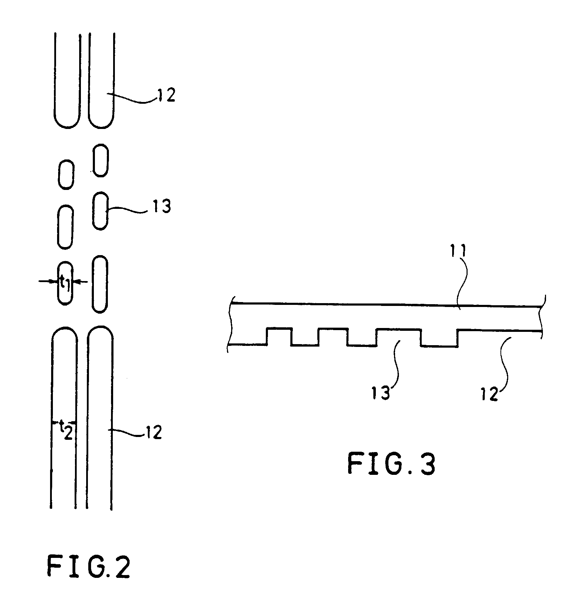

In the figures, 11 is a substrate made of, for example, glass. 12 is guide grooves formed in the substrate 11, and 13 is address signal pits representing the numbers of the guide grooves 12. As shown in Fig. 2, the pit width t₁ of the pits 13 is formed narrower than the groove width t₂ of the guide grooves 12.

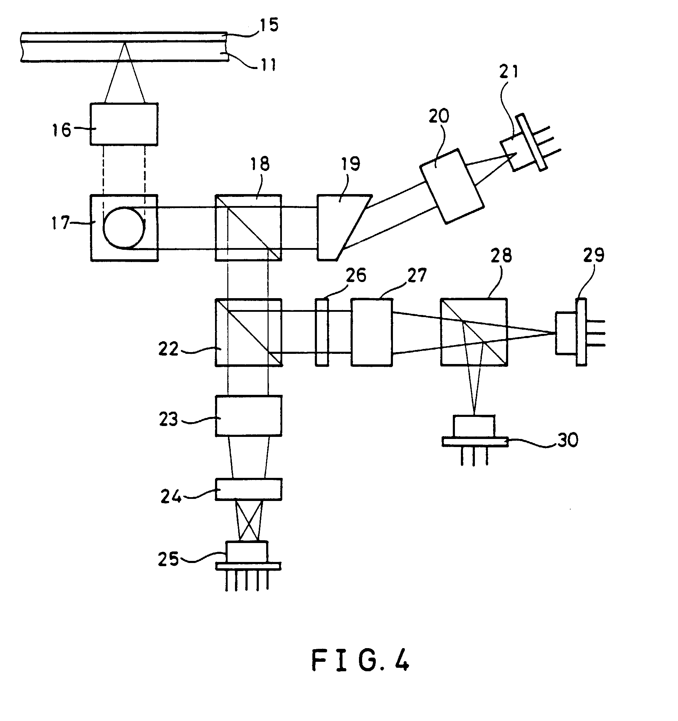

Figure 4 is a conceptual drawing of the construction of the optical system for an optical magnetic disc capable of rewriting the stored information. 11 is a glass substrate, 15 is an optical magnetic recording medium, 16 is an objective lens, 17 is a reflection lens, 18 is a beam splitter, 19 is a beam shape controlling prism, 20 is a collimator lens, 21 is a semiconductor laser, 22 is a beam splitter, 23 is a lens, 24 is a cylindrical lens, 25 is a quarterly PIN photo diode, 26 is a λ/2 filter plate, 27 is a lens, 28 is a deflecting beam splitter, and 29 and 30 are avalanche photo diodes.

In Fig. 4, a tracking signal is obtained from the quarterly PIN photo diode 25 by the push-pull method, and an address signal is obtained by summing the outputs from the two avalanche photo diodes 29 and 30. Information signal is obtained by the differential detection method, that is, by subtraction between the outputs from the avalanche photo diodes 29 and 30. N.A. of the objective lens 16 is 0.6, and the beam is stopped down to about 1.1µm at the position of 1/ₑ2.

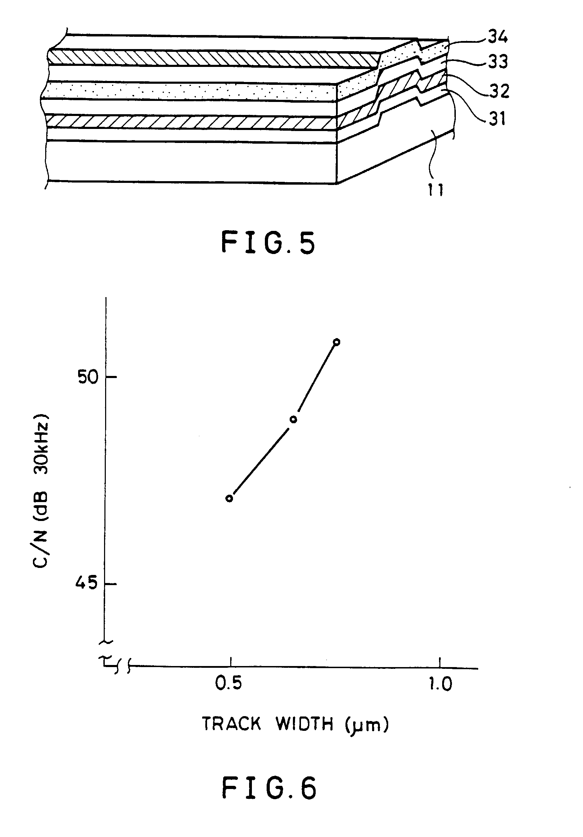

Figure 5 is a partially enlarged view of the optical magnetic disc, in section across the guide track grooves 12, from which disc information is reproduced by the optical system shown in Fig. 4. An AℓN layer 31, GbTbFe 32, AℓN layer 33 and AℓNi layer 34 are formed in lamination on the glass substrate 11 with guide grooves formed therein.

Figure 6 shows C/N plotted as a function of the track width t₂, with 1MHz signal being recorded on or reproduced from the optical magnetic disc (shown in Fig. 5) whose guide groove (track) depth is 70 nm.

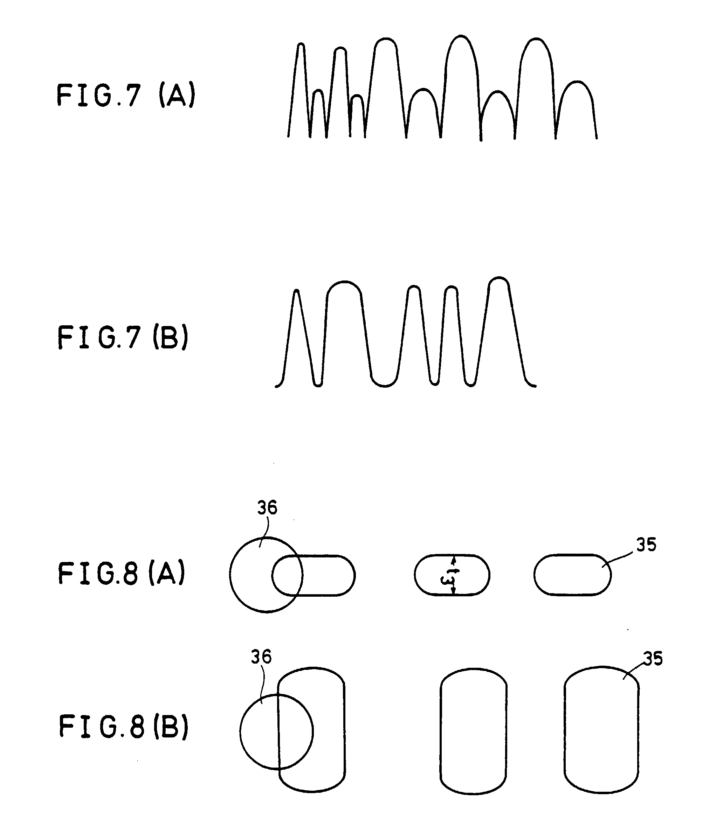

Figure 7 (A) shows the waveform of reproducing address signal of the optical magnetic disc used for the measurement in Fig. 6, for the track width of 0.75µm, and Fig. 7 (B) shows the corresponding waveform for the track width of 0.48µm.

As obvious from Fig. 6, wider track width results in information signal of better C/N. This is easily understood from the following two facts: First, C/N quality depends upon the relationship between the beam diameter 36 and the width t₃ of the signal pits 35 as shown in Fig. 8 (A); ideally, the signal pits 35 should be wider than the beam diameter 36 as shown in Fig. 8 (B). Second, the pit width in the optical magnetic disc having the guide grooves therein is limited by the width t₂ of the guide grooves 12.

Further, it is also appreciated from Figs. 7 (A) and 7 (B) that narrower address signal pit width t₁ effects better result. When a wider pit width t₁ is selected, namely, when the signal pits 35 in Fig. 8 (B) are considered as address signal pits, for instance, the beam 36, which comes in the center of a pit 35, completely enter the pit 35, resulting in the condition as if there was no pit. As a result, amount of light returning to the detector will increase. This is why the signal is high at the center, as shown in Fig. 7(A).

It will be well understood from the above description that, in the optical magnetic recording disc having about λ/8n (65_{∼}70 nm) deep guide track grooves 12 and address signal pits 13, the larger width t₂ of the guide track grooves 12 and the narrower width t₁ of the address signal pits 13, as shown in Fig. 2, yield the better result.

For the optical memory element with the above mentioned construction in which an optical head shown in Fig. 4 is used with a disc shown in Figs. 2, 3 and 5, sufficient tracking signal is obtained with 1µm or narrower track width t₂.

As described above, one of the features of the optical memory element of the present invention is that, where address signal pits are as deep as a guide track groove as shown in Fig. 2, the width of the address signal pits is made narrower and that of the guide track groove made wider.

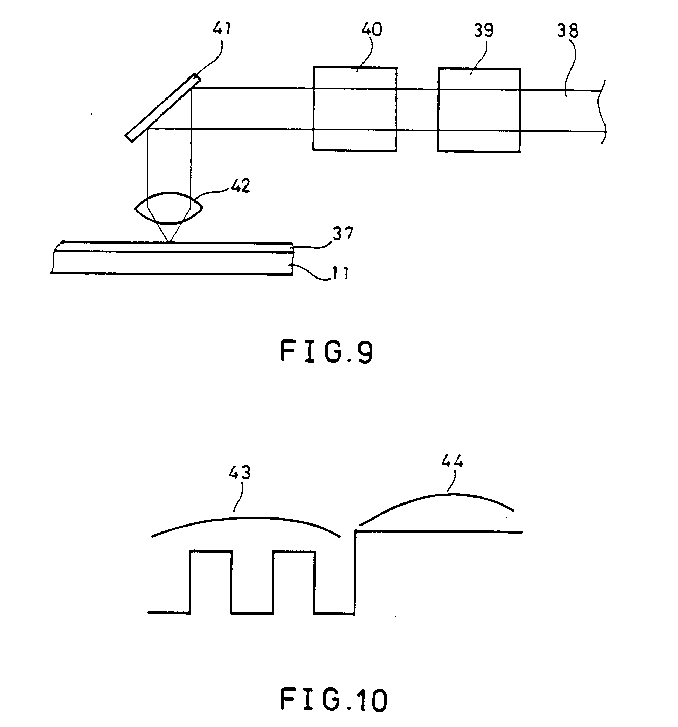

Now, the manufacturing steps for a glass disc used in the present invention will be described in the following with reference to Figure 9.

### Step (i)

A resist film 37 is applied on a glass substrate 11 which does not pass oxygen and moisture therethrough.

### Step (ii)

An argon (Ar) laser beam 38 is applied to the resist film 37 disposed on the glass substrate 11, via light modulators 39 and 40, a mirror 41 and a condenser 42, so as to describe lines of the width t₂ for the guide track grooves 12 (shown in Fig. 2) of the optical memory element as well as intermittent lines of the width t₁ (See Fig. 9 ) for the address signal pits 13. The required widths for the guide track grooves 12 and the address signal pits 13 are obtained by making the laser power larger in describing the lines for the guide track grooves 12 than in describing the intermittent lines for the address signal pits 13.

Specifically, the light modulators 39 and 40 are placed in the light path of the laser (for example, Ar) beam 38, as shown in Fig. 9. One of the light modulators is used for modulating address signals, the other being used for reducing the laser power a little when describing the lines for the address signal pits. Instead of using the above two modulators, a modulator with which modulation changes linearly according to the input may be used. In this case, the input power height 43 (Fig. 10) for recording the address signal pits is made lower than the input power height 44 for recording the guide track grooves.

### Step (iii)

The resist film 37 with the lines and the intermittent lines thereon is developed to form grooves and pits in the resist film 37.

### Step (iv)

Sputtering operation (reactive ion etching) is conducted to the glass substrate 11 coated with the resist film 37 having the grooves formed therein, in the etching gas atmosphere such as CF₄ or CHF₃, so as to form the grooves 12 and the pits 13 in the glass substrate 11.

### Step (v)

The developed resist film 37 is removed from the glass substrate 11 through the use of solvent such as acetone, or by sputtering operation in the O₂ atmosphere. As a result, the guide track grooves 12 of the width t₂ and the address signal pits 13 of the width t₁ are formed in the glass substrate 11.

In this way, the guide track grooves 12 and the address signal pits 13 of the configurations as shown in Fig. 2 are formed in the glass substrate 11.

## Claims

1. A magneto-optical reproducing apparatus for use with a magneto-optical memory element comprising a substrate (11) and a perpendicularly magnetized magneto-optical recording layer (15), said substrate having guide track grooves (12) and address signal pits (13), a width of said guide track grooves being larger than that of said address signal pits, said magneto-optical recording layer (15) having a thickness which remains unchanged during recording or reproducing, said magneto-optical reproducing apparatus comprising:
an address information read-out means for detecting the variation of light beam intensity reflected from said address signal pits; and data information read-out means for detecting the variation of magnetic polarization angle properties in said magneto-optical recording layer disposed on said guide track grooves wider than said address signal pits so as to obtain information signal of improved C/N thereby optimizing the quality of read-out of both the data information and the address information.

2. A magneto-optical reproducing apparatus according to claim 1, wherein the data information read-out means is arranged to detect the differences in the magneto-optical rotation angles corresponding to the directions of magnetization of the perpendicular magnetization layer disposed on the guide track grooves.

3. A magneto-optical reproducing apparatus according to claim 1 or claim 2, wherein the address signal information read-out means is arranged to detect diffraction of light beam intensity reflected from the address signal pit.

4. A magneto-optical reproducing system, comprising a magneto-optical reproducing apparatus according to any preceding claim and a said magneto-optical memory element comprising a substrate (11) and a perpendicularly magnetized magneto-optical recording layer (15), said substrate having guide track grooves (12) and address signal pits (13), a width of said guide track grooves being larger than that of said address signal pits, said magneto-optical recording layer (15) having a thickness which remains unchanged during recording or reproducing.

5. A magneto-optical reproducing system according to claim 4 wherein the depth of the address signal pits (13) is substantially equal to the depth of the guide track grooves (12).

6. A magneto-optical reproducing system according to claim 5, wherein said depth of the address signal pits and guide track grooves is equal to approximately 70nm.

7. A magneto-optical reproducing system according to claim 6, wherein the width of said guide track grooves (12) is about 1.0 µm or less.

8. A magneto-optical reproducing system according to claim 7, wherein the width of said guide track grooves (12) is in the range of 0.75 µm to 1.0 µm.

9. A magneto-optical reproducing system according to any of claims 4 to 8, wherein said substrate (11) is a glass substrate.

10. A magneto-optical reproducing system according to any one of claims 4 to 8, wherein said substrate (11) is a resin substrate.

11. A magneto-optical reproducing system according to any of claims 4 to 10, wherein said magneto-optical recording layer (15) includes an alloy layer (32) of a rare earth element and a transition metal.

12. A magneto-optical reproducing system according to claim 11, wherein said magneto-optical recording layer (15) comprises a GdTbFe alloy layer (32).

13. A magneto-optical reproducing system according to claim 12, wherein said magneto-optical recording layer (15) includes a first AlN layer (31), a GdTbFe layer (32) , a second AlN layer (33), and an AlNi layer (34), which are formed in lamination on said substrate (11).

14. A magneto-optical reproducing system according to any one of claims 4 to 13, wherein at least one said address signal pit (13) is provided between the two successive guide track grooves (12) in a circumferential direction.

15. A magneto-optical reproducing system according to any one of claims 4 to 13, wherein said at least one address signal pit (13) is aligned with said guide track grooves (12) in a longitudinal direction of said guide track grooves (12).

## Patentansprüche

1. Magnetooptisches Wiedergabegerät zur Verwendung mit einem magnetooptischen Speicherelement mit einem Substrat (12) und einer rechtwinklig magnetisierten Aufzeichnungsschicht (15), wobei dieses Substrat Spurführungsgräben (12) und Adressensignalvertiefungen (13) aufweist, wobei die Breite der Spurführungsgräben größer als diejenige der Adressensignalvertiefungen ist und die magnetooptische Aufzeichnungsschicht (15) eine Dicke aufweist, die beim Aufzeichnen oder Abspielen unverändert bleibt, **gekennzeichnet durch**:
eine Adresseninformation-Ausleseeinrichtung zum Erfassen einer Änderung der Intensität eines an den Adressensignalvertiefungen reflektierten Lichtstrahls; und eine Dateninformation-Ausleseeinrichtung zum Erfassen einer Änderung von Eigenschaften des magnetischen Polarisationswinkels in der magnetooptischen Aufzeichnungsschicht, die auf den Spurführungsgräben ausgebildet ist, die breiter als die Adressensignalvertiefungen sind, um ein Informationssignal mit verbessertem T/R-Verhältnis zu erhalten, um dadurch die Auslesequalität sowohl von Dateninformation als auch Adresseninformation zu optimieren.

2. Magnetooptisches Wiedergabegerät nach Anspruch 1, bei dem die Dateninformation-Ausleseeinrichtung so ausgebildet ist, dass sie Differenzen zwischen magnetooptischen Rotationswinkeln entsprechend Magnetisierungsrichtungen der auf den Spurführungsgräben angeordneten Schicht mit rechtwinkliger Magnetisierung erfasst.

3. Magnetooptisches Wiedergabegerät nach Anspruch 1 oder Anspruch 2, bei dem die Adressensignalinformation-Ausleseeinrichtung so ausgebildet ist, dass sie die Abweichung der Intensität des an einer Adressensignalvertiefung reflektierten Lichtstrahls erfasst.

4. Magnetooptisches Wiedergabesystem mit einem magnetooptischen Wiedergabegerät nach einem der vorstehenden Ansprüche, wobei das magnetooptische Speicherelement ein Substrat (11) und eine rechtwinklig magnetisierte magnetooptische Aufzeichnungsschicht (15) umfasst, wobei das Substrat über Spurführungsgräben (12) und Adressensignalvertiefungen (13) verfügt, wobei die Breite der Spurführungsgräben größer als diejenige der Adressensignalvertiefungen ist, und wobei die magnetooptische Aufzeichnungsschicht (15) eine Dicke aufweist, die während des Aufzeichnens oder Abspielens unverändert bleibt.

5. Magnetooptisches Wiedergabesystem nach Anspruch 4, bei dem die Tiefe der Adressensignalvertiefungen (13) im wesentlichen der Tiefe der Spurführungsgräben (12) entspricht.

6. Magnetooptisches Wiedergabesystem nach Anspruch 5, bei dem die Tiefe der Adressensignalvertiefungen und der Spurführungsgräben ungefähr 70 nm entspricht.

7. Magnetooptisches Wiedergabesystem nach Anspruch 6, bei dem die Breite der Spurführungsgräben (12) ungefähr 1,0 µm oder weniger beträgt.

8. Magnetooptisches Wiedergabesystem nach Anspruch 7, bei dem die Breite der Spurführungsgräben (12) im Bereich von 0,75 µm bis 1,0 µm liegt.

9. Magnetooptisches Wiedergabesystem nach einem der Ansprüche 4 bis 8, bei dem das Substrat (11) ein Glassubstrat ist.

10. Magnetooptisches Wiedergabesystem nach einem der Ansprüche 4 bis 8, bei dem das Substrat (11) ein Harzsubstrat ist.

11. Magnetooptisches Wiedergabesystem nach einem der Ansprüche 4 bis 10, bei dem die magnetooptische Aufzeichnungsschicht (15) eine Legierungsschicht (32) aus einem Seltenerdelement und einem Übergangsmetall enthält.

12. Magnetooptisches Wiedergabesystem nach Anspruch 11, bei dem die magnetooptische Aufzeichnungsschicht (15) eine GdTbFe-Legierungsschicht (32) enthält.

13. Magnetooptisches Wiedergabesystem nach Anspruch 12, bei dem die magnetooptische Aufzeichnungsschicht (15) eine erste AlN-Schicht (31), eine GdTbFe-Schicht (32), eine zweite AlN-Schicht (33) und eine AlNi-Schicht (34) aufweist, die auf das Substrat (11) auflaminiert sind.

14. Magnetooptisches Wiedergabesystem nach einem der Ansprüche 4 bis 13, bei dem mindestens eine der Adressensignalvertiefungen (13) zwischen zwei aufeinanderfolgenden Spurführungsgräben (12) in Umfangsrichtung vorhanden ist.

15. Magnetooptisches Wiedergabesystem nach einem der Ansprüche 4 bis 13, bei dem mindestens eine der Adressensignalvertiefungen (13) in der Längsrichtung der Spurführungsgräben (12) mit diesen ausgerichtet ist.

## Revendications

1. Dispositif de reproduction magnéto-optique destiné à être utilisé avec un élément de mémoire magnéto-optique comprenant un substrat (11) et une couche d'enregistrement magnéto-optique à aimantation perpendiculaire (15), ledit substrat présentant des rainures de piste de guidage (12) et des microcuvettes de signal d'adresse (13), une largeur desdites rainures de piste de guidage étant plus importante que celle desdites microcuvettes de signal d'adresse, ladite couche d'enregistrement magnéto-optique (15) présentant une épaisseur inchangée lors de l'enregistrement ou de la reproduction, ledit dispositif de reproduction magnéto-optique comprenant :
un moyen d'extraction d'informations d'adresse destiné à détecter la variation d'intensité d'un faisceau lumineux réfléchi par lesdites microcuvettes de signal d'adresse ; et un moyen d'extraction d'informations de données destiné à détecter la variation des propriétés d'un angle de polarisation magnétique de la couche d'enregistrement magnéto-optique disposée sur lesdites rainures de piste de guidage plus larges que lesdites microcuvettes de signal d'adresse de manière à obtenir un signal d'informations de rapport signal/bruit amélioré, ce par quoi la qualité d'extraction des informations de données et des informations d'adresse peut être optimisée.

2. Dispositif de reproduction magnéto-optique selon la revendication 1, dans lequel le moyen d'extraction d'informations de données est disposé de manière à détecter les différences d'angles de rotation magnéto-optique correspondant aux directions d'aimantation de la couche d'aimantation perpendiculaire disposée sur les rainures de piste de guidage.

3. Dispositif de reproduction magnéto-optique selon la revendication 1 ou la revendication 2, dans lequel le moyen d'extraction des informations de signal d'adresse est disposé afin de détecter la diffraction de l'intensité du faisceau lumineux réfléchi par les microcuvettes de signal d'adresse.

4. Système de reproduction magnéto-optique, comprenant un appareil de reproduction magnéto-optique selon l'une quelconque des revendications précédentes et un desdits éléments de mémoire magnéto-optique comprenant un substrat (11) et une couche d'enregistrement magnéto-optique à aimantation perpendiculaire (15), ledit substrat étant muni de rainures de piste de guidage (12) et de microcuvettes de signal d'adresse (13), une largeur desdites rainures de piste de guidage étant plus importante que celle desdites microcuvettes de signal d'adresse, ladite couche d'enregistrement magnéto-optique (15) présentant une épaisseur inchangée lors d'un enregistrement ou d'une reproduction.

5. Système de reproduction magnéto-optique selon la revendication 4 dans lequel la profondeur des microcuvettes de signal d'adresse (13) est pratiquement égale à la profondeur des rainures de piste de guidage (12).

6. Système de reproduction magnéto-optique selon la revendication 5, dans lequel ladite profondeur des microcuvettes de signal d'adresse et des rainures de piste de guidage est approximativement égale à 70 nm.

7. Système de reproduction magnéto-optique selon la revendication 6, dans lequel la largeur desdites rainures de piste de guidage (12) est d'environ 1,0 µm ou moins.

8. Système de reproduction magnéto-optique selon la revendication 7, dans lequel la largeur desdites rainures de piste de guidage (12) est comprise entre 0,75 µm et 1,0 µm.

9. Système de reproduction magnéto-optique selon l'une quelconque des revendications 4 à 8, dans lequel ledit substrat (11) est un substrat de verre.

10. Système de reproduction magnéto-optique selon l'une quelconque des revendications 4 à 8, dans lequel ledit substrat (11) est un substrat de résine.

11. Système de reproduction magnéto-optique selon l'une quelconque des revendications 4 à 10, dans lequel ladite couche d'enregistrement magnéto-optique (15) inclut une couche d'alliage (32) constituée d'un élément appartenant aux terres rares et d'un métal de transition.

12. Système de reproduction magnéto-optique selon la revendication 11, dans lequel la couche d'enregistrement magnéto-optique (15) comprend une couche d'alliage GdTbFe (32).

13. Système de reproduction magnéto-optique selon la revendication 12, dans lequel ladite couche d'enregistrement magnéto-optique (15) inclut une première couche d'AlN (31), une couche de GdTbFe (32), une seconde couche d'AlN (33) et une couche d'AlNi (34), qui sont formées par stratification sur ledit substrat (11).

14. Système de reproduction magnéto-optique selon l'une quelconque des revendications 4 à 13, dans lequel au moins une desdites microcuvettes de signal d'adresse (13) est placée entre les deux rainures de piste de guidage successives (12) selon une direction suivant la circonférence.

15. Système de reproduction magnéto-optique selon l'une quelconque des revendications 4 à 13, dans lequel ladite microcuvette de signal d'adresse (13) est alignée avec lesdites rainures de piste de guidage (12) dans une direction longitudinale desdites rainures de piste de guidage (12).
